# EUROPEAN PATENT SPECIFICATION

(11) **EP 1 632 388 B1**
(45) Date of publication and mention of the grant of the patent: **10.10.2007**
(21) Application number: 04019349.2
(22) Date of filing: 14.08.2004
(51) Int. Cl.: B60N 2/04, B60N 2/06, B60N 2/12, B60N 2/20, B60N 2/427, B60R 21/01

(54) **A seat system for a vehicle**
Ein Sitzsystem für ein Fahrzeug
Un système de siège pour un véhicule

(43) Date of publication of application: 08.03.2006
(73) Proprietor: Ford Global Technologies, LLC, Dearborn, MI 48126 (US)
(72) Inventor: Downs, John W., Simi Valley, CA 93065 (US); Frasher, Douglas H., Newbury Park, CA 91320 (US); Mendis, Kolita, Thousand Oaks, CA 91362 (US); Stephan, Craig H., Ann Arbor, MI 48103 (US)
(74) Representative: Andersson, Per Rune

(56) References cited:
- EP-A- 1 203 700
- DE-A- 10 254 491
- US-A- 2 959 446
- US-A- 6 030 042
- US-A1- 2002 158 453
- PATENT ABSTRACTS OF JAPAN vol. 016, no. 141 (M-1232), 9 April 1992 (1992-04-09) -& JP 04 002530 A (TACHI S CO LTD), 7 January 1992 (1992-01-07)

## Description

### TECHNICAL FIELD:

The present invention relates to a seat system for a vehicle, wherein at least a front seat and a back seat are attached to a common frame that is movable with respect to the vehicles chassis.

### BACKGROUND ART:

During the last three or four decades, there has been an increased focus on vehicle safety. Several different improvements have been proposed, and some of them, for example the lap diagonal belt and different airbags, are presently more or less standard equipment in new cars.

Another significant improvement has been the introduction of deformation zones that eliminate the crash forces by absorbing energy by deformation. One severe drawback with deformation zones is however that their efficiency largely depends on the size; a large deformation zone can easily absorb large amounts of energy, whereas a small zone can not.

Over the years, several attempts have been made to increase the deformation zone effect without adding bulky deformation zones on the vehicle. This has been made in several different ways. For example, US-A-2 959 446 describes a platform, on which front and back seats are attached, and which is slidably connected to the vehicle chassis and dampened by means of dampeners. In a crash scenario, the platform is meant to slide forward relative to the vehicle chassis, and hence reduce the crash forces the occupants in the car are subjected to. However, since US-A-2 959 446 fails to teach the use of seat belts, there will be no positive effect whatsoever on the safety of the occupants.

US-A-3 268 256 describes a seat arrangement wherein each seat is slidably attached to a longitudinal framework in the vehicle chassis. Each seat is held on place by means of concentrically placed tubes surrounding rod members of the framework. The tubes will deform at a crash, hence absorbing crash energy and reducing crash shock on the occupants in the car.

US-A-6 224 131, US-A-6 454 351 and US-A-6 092 853 all describe different seat suspensions where the seat is moved "backwards", i.e. away from the car's dashboard, in case of a crash. This solution will (maybe) save the drivers face from hitting the dashboard in case of a crash, but will simultaneously significantly increase the crash forces on the human body.

Finally, US 2002/0 145 315, EP-A-0 692 402, US-A-5 022 707 and US-A-3 610 679 describe various individual seat suspensions that will tip the seat backwards in case of a crash.

Another problem, closely connected to deformation zones, arises on small vehicles. Obviously, it is not possible to use large deformation zones on a small vehicle; then it is not small any more. Furthermore, it is often awkward to get in (ingress) or get out (egress) to or from a small car. This problem is most imminent for two or three door cars, i.e. cars not provided with separate doors for backseat ingress/egress. The presently most common way for facilitating ingress/egress on such cars is to use a front seat with a back rest that could be tilted forward, i.e. against the steering wheel or dashboard. Regardless of this, it is however still rather awkward for a person to get in or out of the backseat, especially for elderly or disabled persons.

### SUMMARY OF THE INVENTION:

It is an object of the present invention to solve the above mentioned and other problems in order to facilitate ingress and egress to and from the vehicle, respectively.

This object is achieved by means of a seat system as initially mentioned, which comprises movement means for moving the common seat frame in a generally forward direction to facilitate ingress and egress to and from the vehicle, respectively.

### BRIEF DESCRIPTION OF THE DRAWINGS:

In the following, the present invention will be described more fully, with reference to the appended drawings, wherein;
- Fig 1 a: is a schematic side view of a seat frame according to the present invention in a driving position,
- Fig 1b: is a schematic side view of a seat frame according to the present invention in an ingress/egress facilitating position,
- Figs 2a-2c: are schematic side views of a first, a second and a third embodiment, respectively, of a suspension system for the seat frame according to the present invention,
- Fig 3: is a schematic side view showing the function of the seat frame according the present invention,
- Fig 4: is a schematic side view showing a driving position for a seat frame having a suspension according to the first embodiment, wherein a child seat is attached on a back seat, and
- Figs 5a-5c: are schematic side views showing different embodiments of movement means and dampers for the seat frame.

### PREFERRED EMBODIMENT:

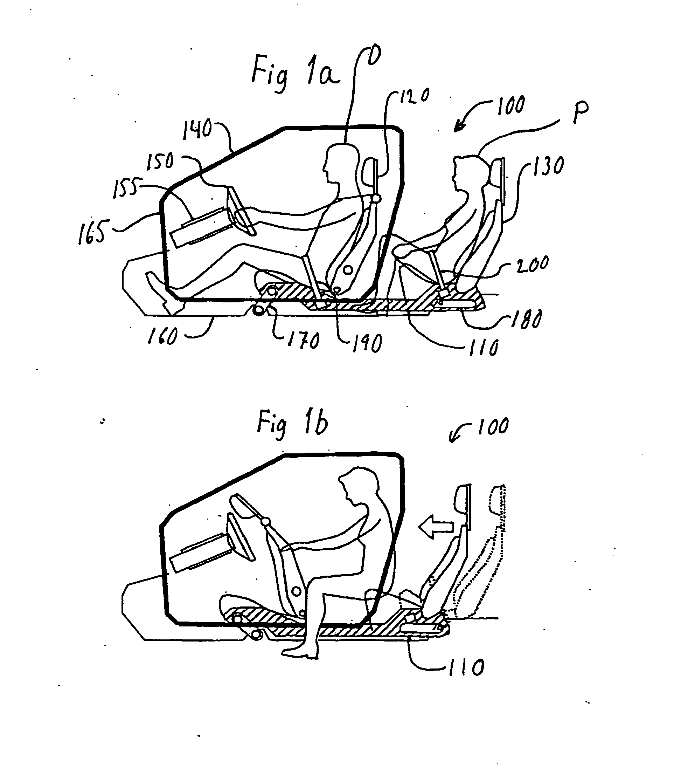

Figs 1 a and 1 b show a vehicle seat arrangement 100, including a seat frame 110, on which a driver's seat 120 and a back seat 130 are attached. Further, a vehicle door 140, a steering wheel 150 connected to a steering mechanism (not shown) by a movable steering column 155, a driver D and a passenger P are shown. The seat frame 110 is connected to a chassis 160 of the vehicle by means of a rocker 170 and a slider 180. The vehicle chassis comprises a door opening 165, serving to access to both back seat passengers and the driver D and / or front seat passengers. As will be evident later, the seat frame 110 can be connected to the chassis 160 in many ways. Still further, the driver D and the passenger P are secured to their places in the driver's seat and the back seat, respectively, by means of seat belts 190 and 200, respectively.

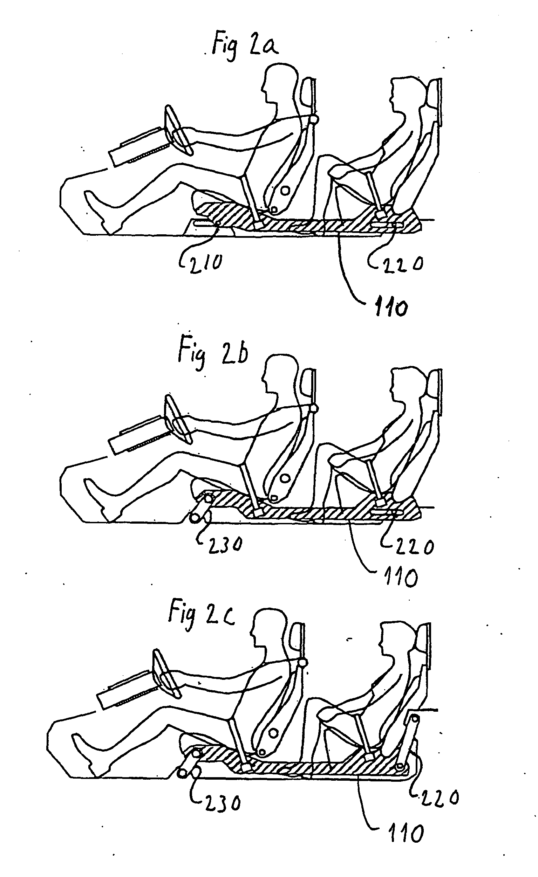

Figs 2a, 2b and 2c show three different embodiments for a suspension of the seat frame 110 from the vehicle chassis 160. In the first embodiment, shown in fig 2a, the seat frame 110 is suspended by slides 210 and 220, which allow the seat frame to slide in a generally straight forward or backward direction compared to the vehicle chassis 160. The second embodiment, shown in fig 2b, uses a combination of a slide 220 and a rocker 230, whereas the third embodiment, shown in fig 2c, uses two rockers 230 and 240 for the translation of the seat frame 110 compared to the vehicle chassis 160.

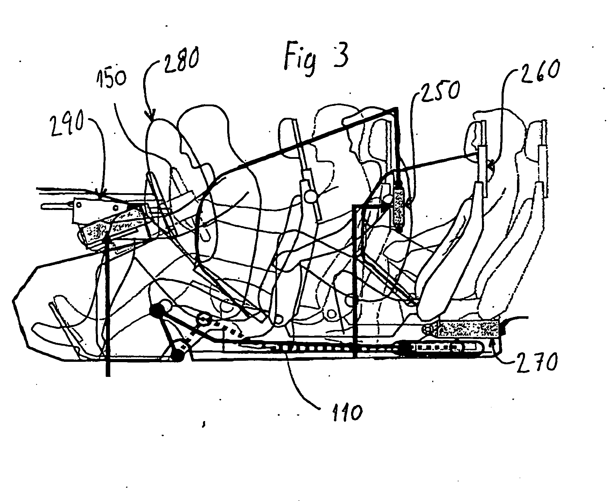

Fig 3 shows schematically the function of the seat frame 110 in a crash scenario. The original positions of the seat frame 110, the steering wheel 150, the driver D and the passenger B are shown in thin lines, whereas their position after the impact are shown in thicker lines. Further, adaptive shoulder belt load controls 250 and 260, a seat frame damper 270, that connects the seat frame and the vehicle chassis, an air bag 280 and a column stroke control 290 for the steering column 155 are shown. The adaptive shoulder belt controls, the seat frame damper, the air bag and column stroke control could all be connected to a master controller (not shown).

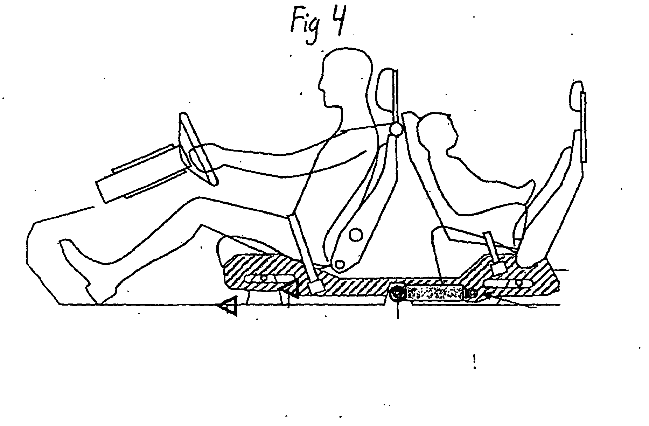

Fig 4 shows how a child seat could be fastened to the back seat of the vehicle. Children will experience a much safer ride with this system compared to seats according to the prior art, since the deceleration forces will be much smaller at an impact; on prior art seats, the deceleration distance was much shorter, since the seat did not move at an impact.

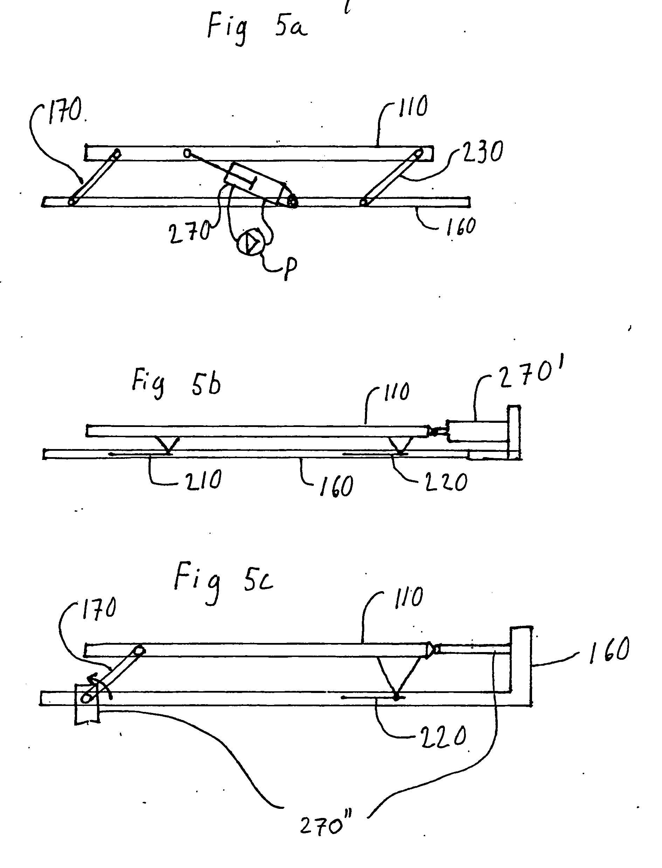

Fig 5a shows an embodiment for the suspension of the seat frame 110 from the chassis 160, wherein the seat frame is suspended from the frame by means of the rockers 170 and 230. Translation of the seat is accomplished by energizing a pump P, which will transport pressurized fluid from a first compartment of the movement means 270 to a second compartment of the movement means 270. Said movement means 270 can be considered to be known per se, and for this reason it is not described in detail here. Optionally, there could be a communication between the two compartments, allowing a restricted flow of fluid; in such cases, the movement means could serve as a damper as well.

Fig 5b shows a second embodiment of the suspension arrangement between the seat frame 110 and the chassis 160. Here, a movement means/damper 270' is placed in line with the seat frame 110, which is suspended from the chassis on the two glide mechanisms 210 and 220.

Fig 5c shows a third embodiment of the suspension of the seat frame 110 from the chassis, wherein separate movement means and damper 270'' are used. For this embodiment, a movement means is attached to the rocker 170, and rotates the rocker for movement of the seat frame 110 relative to the chassis 110, whereas a damper component is arranged in line with the seat frame 110 in a manner generally as described in Fig 5b.

Hereinafter, the function of the seat frame according to the present invention will be explained with reference to the above mentioned figures and components. As is well known by people skilled in the art, and as mentioned in the prior art chapter, there is a problem with small cars, both regarding the limited space for deformation zones and regarding coming in and out of the car (ingress and egress). According to the present invention, these problems are solved by means of the seat frame 110 being movable with respect to the vehicle chassis 160. This is beneficial in at least two ways; firstly, it is possible to decrease the deceleration forces acting on driver and passenger during an impact by letting the seat frame 110 travel forward with respect to the vehicle chassis 160. During this forward movement, it is preferable if the seat frame damper 270 dampens the forward movement by absorbing energy, hence acting like a virtual deformation zone (that actually is not deformed, but absorbs energy in other ways, e.g. by eddy currents, electromagnets, hydraulically, pneumatically, by a friction connection, or by any other means known by people skilled in the art). Secondly, the movable seat frame according to the present invention can facilitate ingress and egress to and from the vehicle, respectively, by being moved in the vehicles forward direction when backseat passengers are going in or out of the vehicle.

As can be seen in Fig 3, the front set lap belt is fastened in the seat or the seat frame, and will hence follow the seat frame in the forward direction. This is not the case with the shoulder belt; it is attached in the vehicle chassis. In this way, it is possible to control the amount of driver/passenger deceleration at an impact; since the total weight of the seat frame is known (and the weight of the driver/passengers can be measured), it is fairly easy to calculate a suitable deceleration force for the entire package including driver, passenger(s), and seat frame, since the only forces exerted on this package emanates from the shoulder belt(s) and the seat frame damper 270.

There is another important benefit with the combination of a movable seat frame and a seat belt fastened to the vehicle chassis, namely that the body of the driver or the passenger will not leave the seat at an impact, something that is important with respect to e.g. whiplash injuries.

Another preferred feature regarding the shoulder belt is that it could be provided with a shoulder belt control that feeds out seat belt in a controlled mode in order to absorb energy in case of a vehicle impact, and hence further reduce the crash forces exerted on the human body.

Regarding the movement of the seat frame with respect to the vehicle chassis in order to facilitate ingress and egress, this could be performed in a number of ways;
1. Manually; the driver might pull a lever after egress in order to move the seat frame in the forward direction,
2. Hydraulically; a hydraulic seat frame damper might be connected to the separate hydraulic pump P;
3. Electrically; it could be beneficial to use an electric motor connected to some kind of drive mechanism (not shown).

With regards to the damper 270, this could be of many types; for example it might be of magnetorheological, hydraulic or friction type. The damper can also be of both linear type (see embodiments of Figs 5a and 5b), and of rotational type (se embodiment of Fig 5c). Further, it is possible to combine the damper/movement means into a single unit (as in the embodiments of Figs 5a and 5b) or use separate movement and damper units (as in the embodiment fo Fig 5c):

It is very important to have some limitations regarding movement of the frame for ingress/egress. For example, is should not be possible to maneuver the seat frame if any seat belt is fastened; if the seat frame should be moved forward and a person is fastened with a seat belt where the shoulder belt is attached to the vehicle frame, this person would be squeezed between the seat and the belt. Further, it should not be possible to move the seat frame in the forward direction if a person is sitting in the driver's seat; that person will be squeezed between the steering wheel and the seat, unless the column stroke control 290 for the steering column 155 is maneuvered at the same time.

A good option could be to control the forward movement of the seat frame 110 by the back rest of the driver's seat; if the backrest of the driver's seat is tilted forwards (which, as mentioned, is a rather common method for facilitating ingress/egress to/from the back seat of the car), the movement means for the seat frame 110 can be energized to move the seat fame forward, without any risk for persons to be squeezed between the steering wheel and the driver's seat.

As mentioned earlier, the adaptive shoulder belt controls 250 and 260, the seat frame damper 270, the air bag 280 and the column stroke control 290 could all be connected to a master controller (not shown). The master controller could be fed with information relating to e.g. vehicle deceleration, seat decoration, occupant mass sensors, belt spool out sensors and column stroke sensors, and feed suitable (in order to minimize crash violence on the occupants) control data regarding belt spool out, airbag inflation, seat frame damper resistance, column stroke, etc, to the concerned components.

Regarding the steering wheel, it is crucial for the safety of the car that the steering wheel column is moved forward in case of an impact. This could be achieved in a number of ways, e.g. by a collapsible steering wheel rod. However, vehicle development is leaping towards "drive-by-wire" systems, i.e. vehicle handling systems not requiring a mechanical connection between the actual control device (in this case the steering wheel) and the device to be controlled (in the case of the steering wheel, the front and/or the back wheels of the vehicle). In the case of a drive-by-wire system, it could be advantageous to attach the steering wheel to the seat frame; then, the steering wheel would travel the same distance forward as the seat frame, hence preventing the drivers face to hit the steering wheel at an impact.

It could also be advantageous to attach the brake pedal, the clutch pedal and the accelerator pedal to the seat frame; this would give foot room and avoid the debilitating foot and ankle injuries commonly sustained in collisions.

The seat frame 110 must not be common for all seats in the vehicle; preferably, two seat frames 110 are used ― one seat frame for the right side of the vehicle and one seat frame for the left side of the car. The use of separate left/right seat frames allows ingress/egress of occupants on one side of the vehicle without the need for occupants in the other side of the vehicle to get out or loosen their seat belts. It is however crucial for the invention that at least one back seat and at least one front or driver's seat is attached to a common frame.

The invention is not limited to the embodiment discussed above, but can be varied within the scope of the appended claims. For example, the invention is not limited to be used in cars such as the one shown in the appended drawings, but can also be used in other types of vehicles such as buses or vans.

## Claims

1. Seat system (100) for a vehicle, wherein at least a front seat (120) and a back seat (130) are attached to a common seat frame (110) that is movable with respect to a vehicles chassis (160), **characterized by** movement means (270; 270', 270") for moving the common seat frame (110) in a generally forward direction to facilitate ingress and egress to and from the vehicle, respectively.

2. The seat system (100) according to claim 1, wherein the ingress/egress to and from the vehicle, respectively, is facilitated by moving the seat frame into a position corresponding to the location of a door opening (165).

3. The seat system (100) according to claim 1 or 2, wherein the movement means (270; 270'; 270") are hydraulically, electrically, or pneumatically operated.

4. The seat system (100) according to any of the preceding claims, wherein the common seat frame (110) is suspended from the vehicle chassis (160) by at least one rocker (170, 220, 230).

5. The seat system (100) according to any of the preceding claims, wherein the common seat frame (110) is suspended from the vehicle chassis (160) by at least one gliding arrangement (180, 210, 220).

6. The seat system (100) according to any of the preceding claims, wherein a steering wheel (150) for vehicle handling is provided with a retractable steering wheel column (155).

7. The seat system (100) according to any of the preceding claims, wherein the steering wheel (150) and / or accelerator, clutch and/or brake pedals are connected to a "drive-by-wire" system.

8. The seat system (100) according to claim 7, wherein the steering wheel (150) and / or accelerator, clutch and/or brake pedals are connected to move with the seat frame (110).

9. A lap and shoulder seat belt (190, 200) in a seat system according to claim 1, **characterized in that** the shoulder belt is connected to the vehicle chassis and the lap belt is connected to the common seat frame.

10. Method for a seat system (100) according to claim 9, allowing a common seat frame (110) movement for facilitating ingress/egress of a vehicle , wherein movement is allowed only if;
no seat belt (190, 200) in the seat system (100) is fastened, and
no occupant (D) is in the front seat (120) or the driver's seat (120).

11. The method according to claim 10, further comprising the step of starting movement when either front seat (120) back rest is tilted in the forward direction, or when a driver's seat (120) back rest is tilted in the forward direction.

## Patentansprüche

1. Sitzsystem (100) für ein Fahrzeug, wobei mindestens ein Vordersitz (120) und ein Rücksitz (130) an einem gemeinsamen Sitzrahmen (110) befestigt sind, der bezüglich eines Fahrzeugchassis (160) beweglich ist, **gekennzeichnet durch** Bewegungseinrichtungen (270, 270', 270") zur Bewegung des gemeinsamen Sitzrahmens (110) allgemein in eine Vorwärtsrichtung, um den Einstieg in und Ausstieg aus dem Fahrzeug zu erleichtern.

2. Sitzsystem (100) nach Anspruch 1, wobei der Einstieg/Ausstieg in bzw. aus dem Fahrzeug erleichtert wird, indem der Sitzrahmen in eine Position bewegt wird, die dem Ort einer Türöffnung (165) entspricht.

3. Sitzsystem (100) nach Anspruch 1 oder 2, wobei die Bewegungseinrichtungen (270, 270', 270" ) hydraulisch, elektrisch oder pneumatisch betätigt werden.

4. Sitzsystem (100) nach einem der vorhergehenden Ansprüche, wobei der gemeinsame Sitzrahmen (110) durch mindestens einen Kipphebel (170, 220, 230) vom Fahrzeugchassis (160) angehoben gehalten wird.

5. Sitzsystem (100) nach einem der vorhergehenden Ansprüche, wobei der gemeinsame Sitzrahmen (110) durch mindestens eine Gleitanordnung (180, 210, 220) vom Fahrzeugchassis (160) 160) angehoben gehalten wird.

6. Sitzsystem (100) nach einem der vorhergehenden Ansprüche, wobei ein Lenkrad (150) für eine Fahrzeugbedienung mit einer einziehbaren Lenksäule (155) versehen ist.

7. Sitzsystem (100) nach einem der vorhergehenden Ansprüche, wobei das Lenkrad (150) und/oder die Gas-, Kupplungs- und/oder Bremspedale mit einem "Drive-by-wire-System" verbunden sind.

8. Sitzsystem (100) nach Anspruch 7, wobei das Lenkrad (150) und/oder die Gas-, Kupplungs- und/oder Bremspedale so verbunden sind, daß sie sich mit dem Sitzrahmen (110) bewegen.

9. Becken- und Schultersicherheitsgurt (190, 200) in einem Sitzsystem nach Anspruch 1, **dadurch gekennzeichnet, daß** der Schultergurt mit dem Fahrzeugchassis verbunden ist und der Beckengurt mit dem gemeinsamen Sitzrahmen verbunden ist.

10. Verfahren für ein Sitzsystem (100) nach Anspruch 9, das eine Bewegung eines gemeinsamen Sitzrahmens (110) zur Erleichterung des Einstiegs/Ausstiegs aus einem Fahrzeug ermöglicht, wobei die Bewegung nur ermöglicht wird, wenn:
kein Sicherheitsgurt (190, 200) im Sitzsystem (100) angelegt ist, und
sich kein Fahrzeuginsasse (D) auf dem Vordersitz (120) oder dem Fahrersitz (120) befindet.

11. Das Verfahren nach Anspruch 10, das ferner den Schritt des Startens der Bewegung aufweist, wenn entweder die Rückenlehne des Vordersitzes (120) in die Vorwärtsrichtung geneigt ist, oder wenn die Rückenlehne des Fahrersitzes (120) in die Vorwärtsrichtung geneigt ist.

## Revendications

1. Système de siège (100) pour un véhicule, dans lequel au moins un siège avant (120) et un siège arrière (130) sont fixés sur un bâti de siège commun (110) qui est mobile par rapport à un châssis de véhicule (160), **caractérisé par** des moyens de déplacement (270; 270', 270'') destinés à déplacer le bâti de siège commun (110) dans une direction globalement vers l'avant afin de faciliter l'entrée et la sortie dans et du véhicule respectivement.

2. Système de siège (100) selon la revendication 1, dans lequel l'entrée/sortie dans et du véhicule, respectivement, est facilitée en déplaçant le bâti de siège dans une position correspondant à l'emplacement d'une ouverture de porte (165).

3. Système de siège (100) selon la revendication 1 ou 2, dans lequel les moyens de déplacement (270; 270', 270'') sont actionnés de manière hydraulique, électrique ou pneumatique.

4. Système de siège (100) selon l'une quelconque des revendications précédentes, dans lequel le bâti de siège commun (110) est suspendu par rapport au châssis de véhicule (160) par au moins un basculeur (170, 220, 230).

5. Système de siège (100) selon l'une quelconque des revendications précédentes, dans lequel le bâti de siège commun (110) est suspendu par rapport au châssis de véhicule (160) par au moins un agencement coulissant (180, 210, 220).

6. Système de siège (100) selon l'une quelconque des revendications précédentes, dans lequel un volant de direction (150) pour la manoeuvre du véhicule est pourvu d'une colonne de volant de direction rétractable (155).

7. Système de siège (100) selon l'une quelconque des revendications précédentes, dans lequel le volant de direction (150) et/ou les pédales d'accélérateur, d'embrayage et/ou de frein sont reliés à un système de « commandes électriques ».

8. Système de siège (100) selon la revendication 7, dans lequel le volant de direction (150) et/ou les pédales d'accélérateur, d'embrayage et/ou de frein sont reliés afin de se déplacer avec le bâti de siège (110).

9. Ceinture de sécurité à trois points (190, 200) dans un système de siège selon la revendication 1, **caractérisée en ce que** le baudrier est relié au châssis de véhicule et la ceinture ventrale est reliée au bâti de siège commun.

10. Procédé pour un système de siège (100) selon la revendication 9, permettant un mouvement de bâti de siège commun (110) afin de faciliter l'entrée/sortie d'un véhicule, selon lequel le mouvement est permis seulement si :
aucune ceinture de sécurité (190, 200) dans le système de siège (100) n'est fixée, et
aucun occupant (D) n'est dans le siège avant (120) ou le siège de conducteur (120).

11. Procédé selon la revendication 10, comportant en outre l'étape de démarrage du mouvement lorsque le dossier de siège avant (120) est basculé dans la direction avant, ou bien lorsqu'un dossier de siège de conducteur (120) est basculé dans la direction avant.
